# EUROPEAN PATENT APPLICATION

(11) **EP 4 715 636 A1**
(43) Date of publication of application: **25.03.2026**
(21) Application number: 25152771.9
(22) Date of filing: 20.01.2025
(51) Int. Cl.: G06F 21/10, G06F 21/12, G06Q 30/0645, H04N 1/44, H04N 1/00

(54) **IMAGE FORMING SYSTEM, IMAGE FORMING METHOD, AND PROGRAM, FOR MANAGING SERVICES IN AN IMAGE-FORMING DEVICE UPON THE EXPIRATION OF THE SUBSCRIPTION CONTRACT**

(30) Priority: 24.09.2024 JP 2024165612
(71) Applicant: FUJIFILM Business Innovation Corp., Minato-ku Tokyo (JP)
(72) Inventor: NAKAHASHI, Eiji, Yokohama-shi (JP); ISHIBASHI, Yasuto, Yokohama-shi (JP); KOBAYASHI, Kento, Yokohama-shi (JP); KATO, Chihaya, Yokohama-shi (JP)
(74) Representative: Haseltine Lake Kempner LLP

(57) **Abstract**

An image forming system includes a processor configured to: set a usage right corresponding to the time of a concluded usage contract period; cause the usage right to expire for the amount of time used out of the set usage right; and if the usage right has expired entirely, activate a use-prohibited state that prohibits use of at least some functions of the system.

## Description

### Background

### (i) Technical Field

The present disclosure relates to an image forming system, an image forming method, and a program.

### (ii) Related Art

Japanese Patent No. 4885993 describes a terminal management method that allows for the addition and restoration of terminals for registered members of a service.

### Summary

Subscription services are offered in which, for example, a usage contract is concluded at intervals of a fixed period, such as monthly or yearly, and the use of an image forming system is permitted during the usage contract period.

However, in the above services, a flat fee is incurred during the usage contract period, regardless of the conditions of use by the user. That is, the fee is the same for users with heavy usage and users with light usage during the usage contract period. Consequently, this creates the issue of disadvantaging users with light usage.

Accordingly, it is an object of the present disclosure to provide an image forming system, a method, and a program that does not disadvantage users who have concluded a usage contract for a set period.

According to a first aspect of the present disclosure, there is provided an image forming system comprising a processor configured to: set a usage right corresponding to the time of a concluded usage contract period; cause the usage right to expire for the amount of time used out of the set usage right; and if the usage right has expired entirely, activate a use-prohibited state that prohibits use of at least some functions of the system.

According to a second aspect of the present disclosure, in the image forming system according to the first aspect, the processor is configured to: set, for each function, a usage right corresponding to the time of a concluded usage contract period; cause, for each function, the usage right to expire for the amount of time used out of the set usage right; and activate a use-prohibited state that prohibits use of a function for which the usage right has expired entirely.

According to a third aspect of the present disclosure, in the image forming system according to the second aspect, the processor is configured to allow at least a portion of the usage right to be transferred from one function to another function.

According to a fourth aspect of the present disclosure, in the image forming system according to the third aspect, the processor is configured to prohibit usage right transfers exceeding a set number of times.

According to a fifth aspect of the present disclosure, in the image forming system according to any one of the first to fourth aspects, the processor is configured to allow at least a portion of the usage right to be transferred from an external apparatus to the system.

According to a sixth aspect of the present disclosure, in the image forming system according to the fifth aspect, the processor is configured to prohibit usage right transfers exceeding a set number of times.

According to a seventh aspect of the present disclosure, in the image forming system according to any one of the first to sixth aspects, the processor is configured to: set, when the usage right has expired entirely, a grace period before activating the use-prohibited state; and set a usage right corresponding to the time of the grace period.

According to an eighth aspect of the present disclosure, in the image forming system according to the seventh aspect, the processor is configured to: set a priority ranking for each function; and set a longer grace period for a function with a higher priority ranking.

According to a ninth aspect of the present disclosure, there is provided an image forming method comprising: setting a usage right corresponding to the time of a concluded usage contract period; causing the usage right to expire for the amount of time used out of the set usage right; and if the usage right has expired entirely, activating a use-prohibited state that prohibits use of at least some functions of an image forming system.

According to a 10th aspect of the present disclosure, there is provided a program causing a computer to execute a process comprising: setting a usage right corresponding to the time of a concluded usage contract period; causing the usage right to expire for the amount of time used out of the set usage right; and if the usage right has expired entirely, activating a use-prohibited state that prohibits use of at least some functions of an image forming system.

According to the image forming system as in the first aspect, it is possible to not disadvantage a user who has concluded a usage contract for a set period.

According to the image forming system as in the second aspect, it is possible to manage a usage right for each function.

According to the image forming system as in the third aspect, it is possible to lend a usage right for a certain function from another function.

According to the image forming system as in the fourth aspect, it is possible to keep usage rights from being transferred without restriction.

According to the image forming system as in the fifth aspect, it is possible to lend a usage right from an external apparatus.

According to the image forming system as in the sixth aspect, it is possible to keep usage rights from being transferred without restriction.

According to the image forming system as in the seventh aspect, it is possible to avoid activating the use-prohibited state immediately upon loss of the usage right.

According to the image forming system as in the eighth aspect, it is possible to make the use-prohibited state activate less readily for a function with a high priority ranking as compared to a function with a low priority ranking.

According to the image forming method as in the ninth aspect, it is possible to not disadvantage a user who has concluded a usage contract for a set period.

According to the program as in the 10th aspect, it is possible to not disadvantage a user who has concluded a usage contract for a set period.

### Brief Description of the Drawings

An exemplary embodiment of the present disclosure will be described in detail based on the following figures, wherein:
Fig. 1 is a diagram illustrating a system configuration of an image forming apparatus management system according to an exemplary embodiment of the present disclosure;
Fig. 2 is a block diagram illustrating a hardware configuration of first and second image forming apparatuses according to an exemplary embodiment of the present disclosure;
Fig. 3 is a block diagram illustrating a hardware configuration of a management server according to an exemplary embodiment of the present disclosure;
Figs. 4A to 4D are diagrams for explaining a usage right process in an image forming apparatus;
Figs. 5A to 5C are diagrams for explaining a process of transferring a usage right between functions in an image forming apparatus; and
Figs. 6A to 6C are diagrams for explaining a process of transferring a usage right between image forming apparatuses.

### Detailed Description

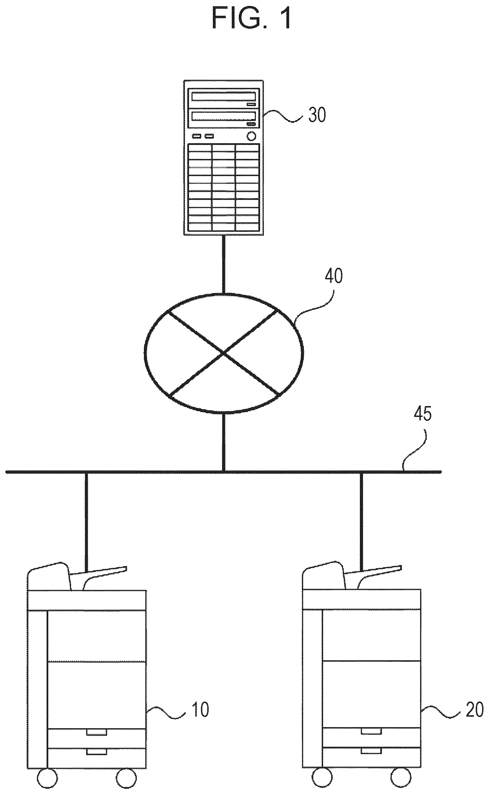

Hereinafter, an exemplary embodiment for carrying out the technology of the present disclosure will be described in detail and with reference to the drawings. Fig. 1 is a diagram illustrating a system configuration of an image forming apparatus management system according to an exemplary embodiment.

As illustrated in Fig. 1, the image forming apparatus management system according to the exemplary embodiment includes a first image forming apparatus 10, a second image forming apparatus 20, and a management server 30.

The first image forming apparatus 10 and the second image forming apparatus 20 are each an apparatus referred to as a multi-function peripheral, and includes multiple functions such as a copy function, a print function, a fax function, and a scan function. The first image forming apparatus 10 and the second image forming apparatus 20 are interconnected over a local network 45. The first image forming apparatus 10 is one example of an image forming system in the technology of the present disclosure.

The management server 30 is a server for managing usage contract periods of the first image forming apparatus 10 and the second image forming apparatus 20. The management server 30 is connected to the local network 45 through the Internet 40.

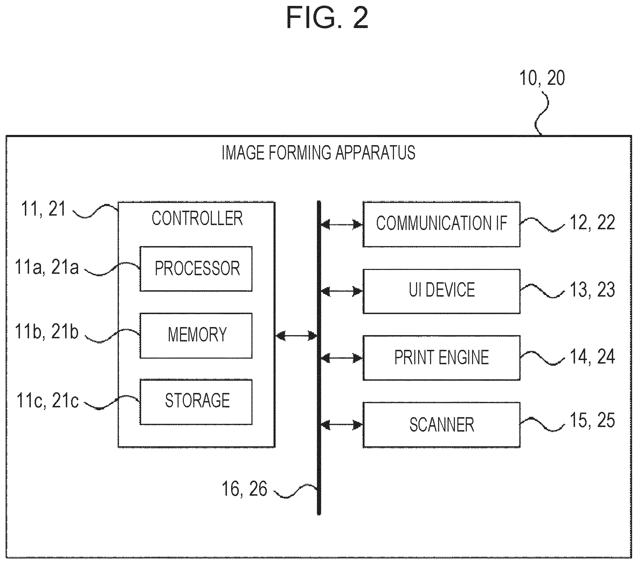

Next, a hardware configuration of the first image forming apparatus 10 according to the exemplary embodiment will be described. Fig. 2 is a block diagram illustrating a hardware configuration of the first image forming apparatus 10. Note that Fig. 2 also serves as a block diagram illustrating a hardware configuration of the second image forming apparatus 20 described later.

As illustrated in Fig. 2, the first image forming apparatus 10 is provided with a controller 11, a communication interface (abbreviated as IF) 12, a user interface (abbreviated as UI) device 13, a print engine 14, and a scanner 15. These components are interconnected through a control bus 16.

The controller 11 is provided with a processor 11a, memory 11b, and storage 11c. The processor 11a executes predetermined processing on the basis of a program read out from the storage 11c and loaded into the memory 11b. The storage 11c is formed from read-only memory (ROM), a hard disk drive (HDD), or a solid-state drive (SSD), for example. The storage 11c stores various programs, data, and the like.

Note that in the exemplary embodiment, the processor 11a is described as reading out and executing a program stored in the storage 11c, but the configuration is not limited thereto. The program may also be provided by being recorded onto a computer-readable recording medium like the above. The program may also be acquired from an external apparatus over a communication channel.

The communication IF 12 transmits and receives data to and from external apparatuses and the like. The UI device 13 is a device such as a touch panel and/or buttons, for example, used by a user to accept and input information. The print engine 14 prints an image onto a recording medium such as printing paper via steps such as charging, exposing, developing, transferring, and fusing. The print engine 14 is one example of a printer in the technology of the present disclosure. The scanner 15 reads a document loaded into the first image forming apparatus 10 as image data.

Next, a hardware configuration of the second image forming apparatus 20 according to the exemplary embodiment will be described. As illustrated in Fig. 2, the second image forming apparatus 20 is provided with a controller 21, a communication IF 22, a UI device 23, a print engine 24, and a scanner 25. These components are interconnected through a control bus 26.

Since these components are the same as those of the first image forming apparatus 10, a detailed description is omitted.

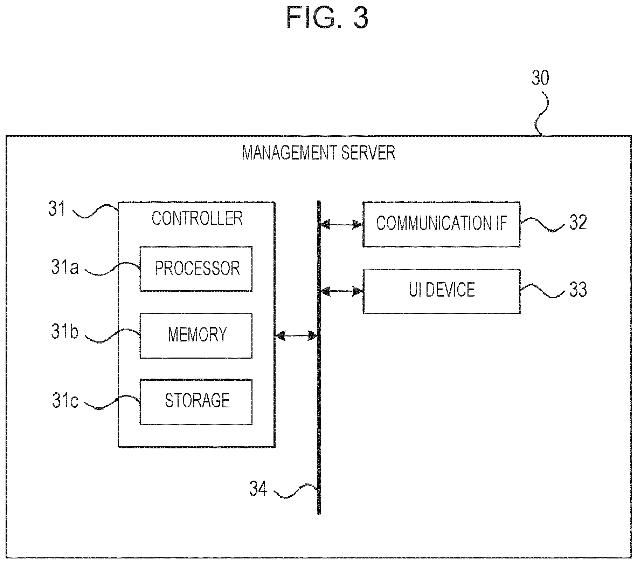

Next, a hardware configuration of the management server 30 according to the exemplary embodiment will be described. Fig. 3 is a block diagram illustrating a hardware configuration of the management server 30.

As illustrated in Fig. 3, the management server 30 is provided with a controller 31, a communication IF 32, and a UI device 33. These components are interconnected through a control bus 34.

The controller 31 is provided with a processor 31a, memory 3 1b, and storage 31c. The processor 31a executes predetermined processing on the basis of a program read out from the storage 31c and loaded into the memory 31b. The storage 31c is formed from ROM, an HDD, or an SSD, for example. The storage 31c stores various programs, data, and the like.

Note that in the exemplary embodiment, the processor 31a is described as reading out and executing a program stored in the storage 31c, but the configuration is not limited thereto. The program may also be provided by being recorded onto a computer-readable recording medium like the above. The program may also be acquired from an external apparatus over a communication channel.

The communication IF 32 transmits and receives data to and from external apparatuses and the like. The UI device 33 is a device such as a mouse and/or a keyboard, for example, used by a user to input information.

One usage pattern of the first image forming apparatus 10 and the second image forming apparatus 20 involves, for example, the user and a service provider concluding a usage contract, and the user periodically paying the service provider a fee, whereby the service provider lends the first image forming apparatus 10 and the second image forming apparatus 20 to the user and offers a maintenance service that provides consumables for using the first image forming apparatus 10 and the second image forming apparatus 20 and provides troubleshooting and the like when trouble occurs.

However, in such a maintenance service, a flat fee is incurred during the usage contract period, regardless of the conditions of use by the user. That is, the fee is the same for users with heavy usage and users with light usage during the usage contract period. Consequently, this creates the issue of disadvantaging users with light usage.

To address such an issue, the image forming apparatus management system according to the exemplary embodiment is configured as follows. Note that although the following is described in terms of the first image forming apparatus 10, the configuration is similar for the second image forming apparatus 20, too.

The controller 11 of the first image forming apparatus 10 according to the exemplary embodiment sets a usage right corresponding to the time of the concluded usage contract period, causes the usage right to expire for the amount of time used out of the set usage right, and when the usage right expires entirely, activates a use-prohibited state that prohibits the use of at least some functions of the system.

Hereinafter, processing in the image forming system according to the exemplary embodiment will be described in detail.

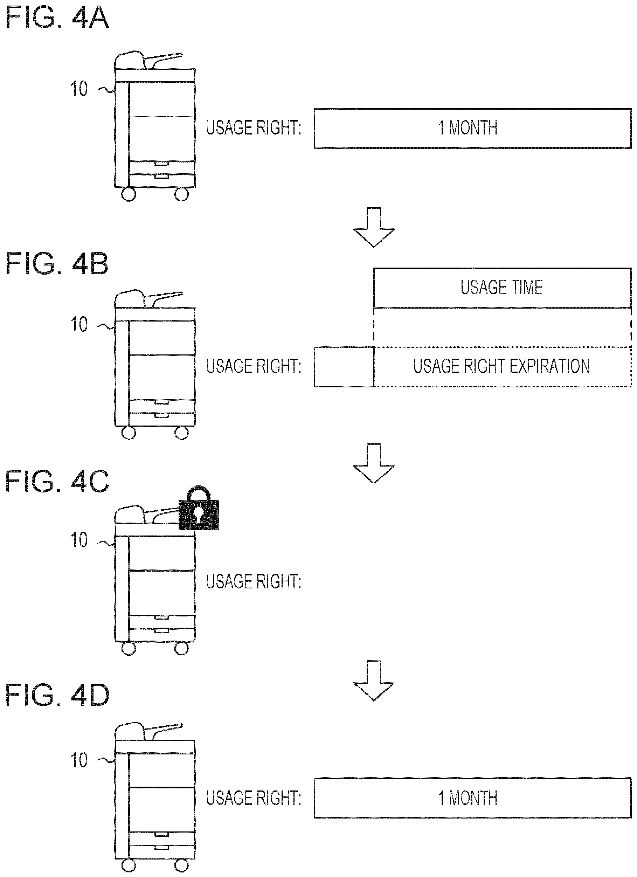

First, the controller 11 sets a usage right corresponding to the time of the concluded usage contract period. As an example, when a usage contract period for one month has been concluded, a usage right for one month is set, as illustrated in Fig. 4A. Note that the usage right for one month is set by considering one month to be 30 days, which is converted to seconds and set as a usage right for 2.592 million seconds.

Next, the controller 11 causes the usage right to expire for the amount of time used out of the set usage right. As an example, if the user has used the first image forming apparatus 10 for 2 million seconds, the usage right for 2 million seconds out of the set usage right is made to expire, as illustrated in Fig. 4B.

Next, if the usage right has expired entirely, the controller 11 activates a use-prohibited state that prohibits the use of at least some of the functions of the system, as illustrated in Fig. 4C. Such a function is referred to as a device lock.

Note that when applying a device lock, the use of all functions of the first image forming apparatus 10 may be prohibited, or the use of only some functions may be prohibited. In the case of prohibiting the use of some functions, use may not be prohibited for a function with a high usage frequency and/or a function lacking reproducibility, such as fax, for example, while use may be prohibited for the remaining functions.

Also, when the usage contract period is renewed, the controller 11 sets a usage right corresponding to the time of the new usage contract period, as illustrated in Fig. 4D. Note that when the usage contract period is renewed while the device lock is applied to the first image forming apparatus 10, the controller 11 releases the device lock on the first image forming apparatus 10.

In the first image forming apparatus 10 according to the exemplary embodiment, the controller 11 may also set, for each function, a usage right corresponding to the time of the concluded usage contract period, cause, for each function, the usage right to expire for the amount of time used out of the set usage right, and activate a use-prohibited state that prohibits the use of a function for which the usage right has expired entirely.

In this case, the controller 11 may also allow at least a portion of the usage right to be transferred from one function to another function. Furthermore, in this case, the controller 11 may also prohibit usage right transfers exceeding a set number of times.

Hereinafter, processing for the above aspect will be described in detail.

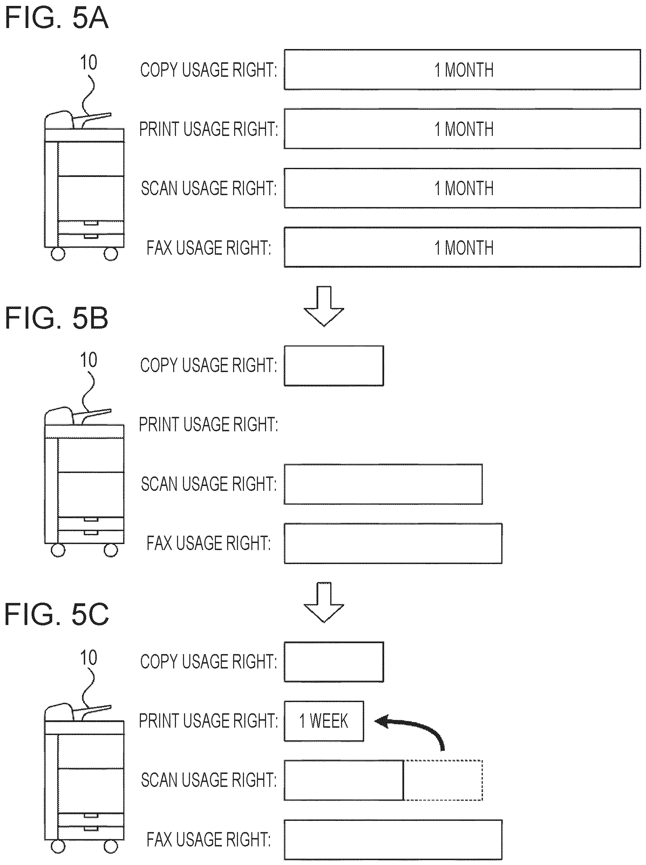

As an example, the controller 11 sets a usage right corresponding to the time of the concluded usage contract period for each of copy, print, scan, and fax functions, as illustrated in Fig. 5A.

Next, the controller 11 causes, for each function, the usage right to expire for the amount of time used out of the set usage right, as illustrated in Fig. 5B. Note that in the case of executing an instruction document causing operation that links jobs involving multiple functions, the controller 11 causes the usage right to expire for the amount of time used by each individual function.

In this situation, if there is a function for which the usage right has expired entirely, the controller 11 would normally perform processing to prohibit the use of that function. However, in response to instruction input from an administrator user, for example, the controller 11 may transfer a portion of the usage right from another function with a remaining usage right to the function for which the usage right has expired entirely.

For example, in the case where the print usage right has expired entirely as illustrated in Fig. 5B, the controller 11 may, in response to instruction input from an administrator user, transfer a usage right for one week (that is, 0.6048 million seconds) from scan, which has a remaining usage right, to print, as illustrated in Fig. 5C.

The controller 11 may also allow at least a portion of the usage right to be transferred to the first image forming apparatus 10 from the second image forming apparatus 20 under contract by the same user. The second image forming apparatus 20 is one example of an external apparatus in the technology of the present disclosure.

In this case, the controller 11 may also prohibit usage right transfers exceeding a set number of times. Also, the two apparatus involved in the transfer of a usage right may be limited to apparatuses under contract by the same user.

Hereinafter, processing for the above aspect will be described in detail.

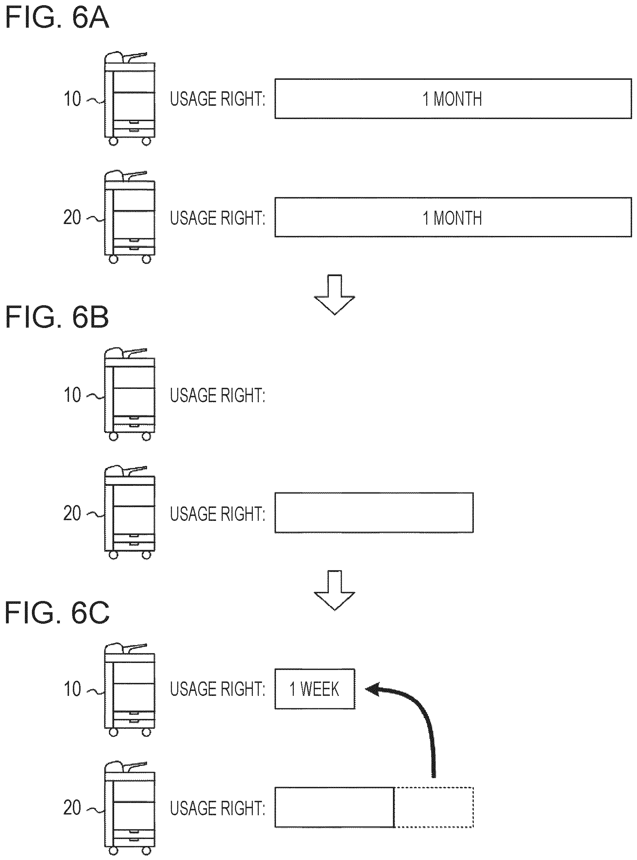

As an example, the controller 11 of the first image forming apparatus 10 sets a usage right for one month (that is, 2.592 million seconds) corresponding to the time of the concluded usage contract period, as illustrated in Fig. 6A.

Similarly, the controller 21 of the second image forming apparatus 20 likewise sets a usage right for one month (that is, 2.592 million seconds) corresponding to the time of the concluded usage contract period.

Next, the controller 11 and the controller 21 each cause the usage right to expire for the amount of time used out of the set usage right, as illustrated in Fig. 6B.

In this situation, if the usage right expires entirely, the controller 11 and the controller 21 would normally perform processing to prohibit the use of the apparatus. However, in response to instruction input from an administrator user, for example, the controller 11 and the controller 21 may transfer a portion of the usage right from the apparatus with a remaining usage right to the apparatus for which the usage right has expired entirely.

For example, in the case where the usage right of the first image forming apparatus 10 has expired entirely as illustrated in Fig. 6B, the controller 11 may, in response to instruction input from an administrator user, transfer a usage right for one week (that is, 0.6048 million seconds) from the second image forming apparatus 20, which has a remaining usage right, to the first image forming apparatus 10, as illustrated in Fig. 6C.

Also, when the usage right has expired entirely, the controller 11 may set a grace period before activating the use-prohibited state, and set a usage right corresponding to the time of the grace period. In this case, the controller 11 may also set a priority ranking for each function and set a longer grace period for a function with a higher priority ranking.

The priority ranking may be set such that, for example, a higher priority ranking is given to a function with a high usage frequency and/or a function lacking reproducibility, such as fax, for example, while a lower priority ranking is given to the remaining functions.

The controller 11 may also cause the usage right expiration control for each function to work in conjunction with the connection status of the hardware for realizing each function. For example, if a fax board for realizing the fax function and a scanner for realizing the scan function have been removed from the first image forming apparatus 10, the controller 11 may disable fax and scan, and not cause the usage right to expire.

Also, information about the usage rights set in the first image forming apparatus 10 and the second image forming apparatus 20 may be synchronized with the management server 30 and managed in real time. With this arrangement, if the information about usage rights in the first image forming apparatus 10 and the second image forming apparatus 20 is unexpectedly lost, falsified, or the like, the information can be restored to the correct state. The usage rights set in the first image forming apparatus 10 and the second image forming apparatus 20 may also be forcibly eliminated from the management server 30 side.

### [Exemplary modifications]

The foregoing describes an image forming system according to one exemplary embodiment of the present disclosure, but the technology of the present disclosure is not limited to the exemplary embodiment above, and modifications may also be made, as appropriate.

In the exemplary embodiment above, the term "processor" refers to hardware in a broad sense. Examples of the processor include general processors (e.g., CPU: Central Processing Unit), dedicated processors (e.g., GPU: Graphics Processing Unit, ASIC: Application Integrated Circuit, FPGA: Field Programmable Gate Array, and programmable logic device).

In the exemplary embodiment above, the term "processor" is broad enough to encompass one processor or plural processors in collaboration which are located physically apart from each other but may work cooperatively. The order of operations of the processor is not limited to one described in the exemplary embodiment above, and may be changed.

The system in the technology of the present disclosure refers to both a configuration formed by multiple apparatuses and a configuration formed by a single apparatus.

The technology of the present disclosure is also applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents. Appendix
(((1))) An image forming system comprising a processor configured to:
   set a usage right corresponding to the time of a concluded usage contract period;
   cause the usage right to expire for the amount of time used out of the set usage right; and
   if the usage right has expired entirely, activate a use-prohibited state that prohibits use of at least some functions of the system.
(((2))) The image forming system according to (((1))), wherein the processor is configured to:
   set, for each function, a usage right corresponding to the time of a concluded usage contract period;
   cause, for each function, the usage right to expire for the amount of time used out of the set usage right; and
   activate a use-prohibited state that prohibits use of a function for which the usage right has expired entirely.
(((3))) The image forming system according to (((2))), wherein the processor is configured to allow at least a portion of the usage right to be transferred from one function to another function.
(((4))) The image forming system according to (((3))), wherein the processor is configured to prohibit usage right transfers exceeding a set number of times.
(((5))) The image forming system according to any one of (((1))) to (((4))), wherein the processor is configured to allow at least a portion of the usage right to be transferred from an external apparatus to the system.
(((6))) The image forming system according to (((5))), wherein the processor is configured to prohibit usage right transfers exceeding a set number of times.
(((7))) The image forming system according to any one of (((1))) to (((6))), wherein the processor is configured to:
   set, when the usage right has expired entirely, a grace period before activating the use-prohibited state; and
   set a usage right corresponding to the time of the grace period.
(((8))) The image forming system according to (((7))), wherein the processor is configured to:
   set a priority ranking for each function; and
   set a longer grace period for a function with a higher priority ranking.
(((9))) A program causing a computer to execute a process comprising:
   setting a usage right corresponding to the time of a concluded usage contract period;
   causing the usage right to expire for the amount of time used out of the set usage right; and
   if the usage right has expired entirely, activating a use-prohibited state that prohibits use of at least some functions of an image forming system.

The following describes effects produced by the configurations in the appendix.

According to the image forming system as in (((1))), it is possible to not disadvantage a user who has concluded a usage contract for a set period.

According to the image forming system as in (((2))), it is possible to manage a usage right for each function.

According to the image forming system as in (((3))), it is possible to lend a usage right for a certain function from another function.

According to the image forming system as in (((4))), it is possible to keep usage rights from being transferred without restriction.

According to the image forming system as in (((5))), it is possible to lend a usage right from an external apparatus.

According to the image forming system as in (((6))), it is possible to keep usage rights from being transferred without restriction.

According to the image forming system as in (((7))), it is possible to avoid activating the use-prohibited state immediately upon loss of the usage right.

According to the image forming system as in (((8))), it is possible to make the use-prohibited state activate less readily for a function with a high priority ranking as compared to a function with a low priority ranking.

According to the program as in (((9))), it is possible to not disadvantage a user who has concluded a usage contract for a set period.

## Claims

1. An image forming system comprising:
a processor configured to:
set a usage right corresponding to the time of a concluded usage contract period;
cause the usage right to expire for the amount of time used out of the set usage right; and
if the usage right has expired entirely, activate a use-prohibited state that prohibits use of at least some functions of the system.

2. The image forming system according to claim 1, wherein the processor is configured to:
set, for each function, a usage right corresponding to the time of a concluded usage contract period;
cause, for each function, the usage right to expire for the amount of time used out of the set usage right; and
activate a use-prohibited state that prohibits use of a function for which the usage right has expired entirely.

3. The image forming system according to claim 2, wherein the processor is configured to allow at least a portion of the usage right to be transferred from one function to another function.

4. The image forming system according to claim 3, wherein the processor is configured to prohibit usage right transfers exceeding a set number of times.

5. The image forming system according to any one of claims 1 to 4, wherein the processor is configured to allow at least a portion of the usage right to be transferred from an external apparatus to the system.

6. The image forming system according to claim 5, wherein the processor is configured to prohibit usage right transfers exceeding a set number of times.

7. The image forming system according to any of claims 1 to 6, wherein the processor is configured to:
set, when the usage right has expired entirely, a grace period before activating the use-prohibited state; and
set a usage right corresponding to the time of the grace period.

8. The image forming system according to claim 7, wherein the processor is configured to:
set a priority ranking for each function; and
set a longer grace period for a function with a higher priority ranking.

9. An image forming method comprising:
setting a usage right corresponding to the time of a concluded usage contract period;
causing the usage right to expire for the amount of time used out of the set usage right; and
if the usage right has expired entirely, activating a use-prohibited state that prohibits use of at least some functions of an image forming system.

10. A program causing a computer to execute a process comprising:
setting a usage right corresponding to the time of a concluded usage contract period;
causing the usage right to expire for the amount of time used out of the set usage right; and
if the usage right has expired entirely, activating a use-prohibited state that prohibits use of at least some functions of an image forming system.
